# EUROPÄISCHE PATENTSCHRIFT

(11) **EP 1 733 284 B1**
(45) Veröffentlichungstag und Bekanntmachung des Hinweises auf die Patenterteilung: **14.08.2013**
(21) Anmeldenummer: 05717148.0
(22) Anmeldetag: 24.03.2005
(51) Int. Cl.: G05B 19/042, G06F 9/52

(54) **ABLAUFSTEUERUNG VON FUNKTIONEN AUF MITEINANDER WECHSELWIRKENDEN GERÄTEN**
CONTROL SYSTEM FOR OPERATING FUNCTIONS ON INTERACTING APPLIANCES
COMMANDE D'EXECUTION DE FONCTIONS SUR DES APPAREILS QUI INTERAGISSENT LES UNS AVEC LES AUTRES

(30) Priorität: 31.03.2004 DE 102004016473
(43) Veröffentlichungstag der Anmeldung: 20.12.2006
(73) Patentinhaber: ROBERT BOSCH GMBH, 70442 Stuttgart (DE)
(72) Erfinder: HILLNER, Hans, 76131 Karlsruhe (DE); HERZ, Klaus, 74223 Flein (DE); CHEN, Lu, 74321 Bietigheim-Bissingen (DE); EBERT, Michael, 71723 Grossbottwar-Winzerhausen (DE); KOENIG, Timo, 74321 Bietigheim (DE)
(86) Internationale Anmeldenummer: PCT/EP2005/051389
(87) Internationale Veröffentlichungsnummer: WO 2005/096108

(56) Entgegenhaltungen:
- DE-A1- 10 025 493
- DE-A1- 19 731 116
- DE-A1- 19 744 230

## Beschreibung

### Stand der Technik

Die vorliegende Erfindung betrifft ein Verfahren zur Ablaufsteuerung einer Mehrzahl von Funktionen, die auf wenigstens zwei miteinander wechselwirkenden Geräten ausführbar sind, wobei erste der Funktionen auf einem ersten der Geräte und zweite der Funktionen auf einem zweiten der Geräte implementiert sind. Ferner betrifft die Erfindung ein System, insbesondere ein System zur Ausführung eines solchen Verfahrens, mit wenigstens zwei miteinander wechselwirkenden Geräten mit auf diesen ausführbaren Funktionen, wobei erste der Funktionen auf einem ersten der Geräte und zweite der Funktionen auf einem zweiten der Geräte implementiert sind. Bei den Funktionen kann es sich insbesondere um sogenannte Diagnosefunktionen zum Überprüfen von Betriebsweisen oder Komponenten einer von den Geräten gesteuerten Vorrichtung handeln.

Als Beispiel für eine von wenigstens zwei solchen Geräten gesteuerte Vorrichtung sei ein Verbrennungsmotor in einem modernen Kraftfahrzeug genannt. Der Motor kann verschiedene Komponenten wie beispielsweise Einspritzventile, Drosselklappen, Aktuatoren oder verschiedene Sensoren wie Temperatursensoren, Drehzahlgebersensoren oder eine Lambdasonde, umfassen. In solchen Verbrennungsmotoren werden die auch Steuergeräte genannten Geräte beispielsweise zum Steuern einer Kraftstoffzufuhr, eines Zündzeitpunkts und anderer Betriebsparameter des Motors eingesetzt. Die Steuergeräte sind üblicherweise um einen Mikroprozessor oder Mikrocontroller herum aufgebaut. Auf den Steuergeräten können bis zu mehrere Hundert Diagnosefunktionen implementiert sein. Diese Diagnosefunktionen überprüfen verschiedenste Betriebsweisen und Komponenten des Verbrennungsmotors während dessen Betrieb. Sie nutzen Werte von Betriebsparametern des Motors, wie z.B. der Temperatur oder der Drehzahl, die von den im Motor eingebauten Sensoren geliefert werden. Einige der Diagnosefunktionen laufen passiv ab und lesen die von den Sensoren gelieferten Werte einfach ab, während andere Diagnosefunktionen aktiv in den Motorbetrieb eingreifen, um die dann von den Sensoren gelieferten Werte abzufragen. Wird von einer der Diagnosefunktionen bei einer Betriebsweise oder einer Komponente des Motors ein Fehler festgestellt, so wird in einem Fehlerprotokoll in Form einer elektronischen Datei eine Information über diesen Fehler gespeichert, die dann später von einem Scan-Tool ausgelesen werden kann. Je nach Relevanz des Fehlers kann auch ein Warnsignal auf dem Armaturenbrett des Kraftfahrzeuges ausgelöst werden.

Von verschiedenen Steuergeräten durchgeführt Diagnosefunktionen sind nicht notwendigerweise miteinander kompatibel. Beispielsweise können in den Motorbetrieb eingreifende Diagnosefunktionen zur Vermessung bestimmter Betriebsparameter des Motors oder einer seiner Komponenten in einem bestimmten Zustand andere der Betriebsparameter des Verbren--nungsmotors für die Zeit der Messung auf vorgegebene Werte einstellen. Wenn parallel zu einer solchen aktiven Diagnosefunktion eine weitere Diagnosefunktion abläuft, die auf Werte der von der aktiv in den Motorbetrieb eingreifenden Diagnosefunktion eingestellten Betriebsparameter zugreift, dann gelangt diese weitere Diagnosefunktion zu einem falschen Ergebnis. Es ist deshalb notwendig, ein gleichzeitiges Ablaufen solcher Diagnosefunktionen, von denen wenigstens eine die andere störend beein-flusst, zu vermeiden.

Aus DE 197 44 230 A1 sind ein Steuergerät für einen Verbrennungsmotor eines Kraftfahrzeugs und ein Betriebsverfahren dafürbekannt, bei dem ein Scheduler eine zeitliche Reihenfolge von Funktionen derart festlegt, dass zu keiner Zeit zwei Funktionen ablaufen, von denen eine die andere störend beeinflusst. Ein Prioritätsverwalter weist den Funktionen nach verschiedenen Schemata veränderliche Prioritäten zu, und der Scheduler aktiviert unter denjenigen Funktionen, die gleichzeitig aktiv sein dürfen, diejenigen mit der höchsten Priorität.

### Vorteile der Erfindung

Durch die vorliegende Erfindung, wie in Anspruch 1 definiert, wird ein Verfahren zur Ablaufsteuerung einer Mehrzahl von Funktionen, die auf wenigstens zwei miteinander wechselwirkenden Geräten implementiert sind, sowie ein System zur Ausführung dieses Verfahrens geschaffen, das eine flexible Reaktion auf festgestellte Fehler ermöglicht. Funktionen, die eventuell aufgrund eines Fehlers der Vorrichtung nicht lauffähig sind oder beim Ablaufen zu falschen Resultaten führen würden, können mit dem erfindungsgemäßen Verfahren von der Auswahl ausgeschlossen werden.

Die Reihenfolge, in welcher die Funktionen ausgeführt werden, hängt von dem den Funktionen zugeordneten Prioritätswert ab. Dieser kann während des Betriebes der Geräte ständig neu berechnet werden. Beispielsweise kann mit dem Prioritätswert eine seit der letzten Ausführung einer Funktion verstrichene Zeitspanne berücksichtigt werden, so dass einer Funktion ein umso höherer Prioritätswert vergeben wird, je länger ihre letztmalige Ausführung zurückliegt. Die Abläufe der Funktionen werden auf diese Weise unterschiedlichen Betriebszuständen der Vorrichtung angepasst und eine verbesserte zeitliche Abdeckung von Betriebszyklen der Vorrichtung mit Funktionen ist gewährleistet. Ein weiterer Vorteil der Erfindung ergibt sich aus der Möglichkeit, Modifikationen ohne größeren Aufwand vornehmen zu können. Wird beispielsweise nach Inbetriebnahme der Geräte zu einem späteren Zeitpunkt festgestellt, dass bei gleichzeitigem Ablauf einer ersten Funktion und einer zweiten Funktion wider Erwarten doch eine von beiden die jeweils andere störend beeinflusst, so können diese beiden Funktionen mühelos als ein zusätzliches verbotenes Paar festgelegt werden. Es muss weder eine neue komplizierte Ablaufreihenfolge für die Gesamtheit der Funktionen erstellt werden, noch ist eine aufwändige Erstellung eines neuen Programmcodes notwendig. Zur apparativen Ausführung des erfindungsgemäßen Verfahrens kann auf bereits bekannte Geräte mit Verwaltungseinheiten zurückgegriffen werden. Beispielsweise kann auf bekannte Geräte, wie sie zur Steuerung einer Vorrichtung mittels nur eines Gerätes mit auf diesem implementierten Funktionen im Gebrauch sind, zurückgegriffen werden.

Bei einer bevorzugten Ausführung der Erfindung werden die Schritte (b), (c) und (d) von einer allen Geräten gemeinsamen Verwaltungseinheit ausgeführt. Diese Verwaltungseinheit ist somit hinsichtlich dieser Schritte (b) bis (d) für alle Geräte zuständig. Zum Starten der identifizierten Funktion erteilt die Verwaltungseinheit anschließend demjenigen Gerät, auf dem die identifizierte Funktion implementiert ist, einen Startbefehl für diese Funktion.

Bei einer weiteren erfindungsgemäßen Ausführung führt eine zum ersten Gerät gehörende erste Verwaltungseinheit die Schritte (b), (c) und (d) aus, während eine Verwaltungseinheit des zweiten Geräts entsprechende Schritte (b'), (c') und (d') hinsichtlich der zweiten Funktionen ausführt, und in einem Schritt (e') eine im Schritt (d') identifizierte zweite Funktion startet. Bei dieser Ausführung sind in die Ablaufsteuerung für die Funktionen sowohl die erste Verwaltungseinheit als auch die zweite Verwaltungseinheit eingebunden, wobei jede der Verwaltungseinheiten für die Funktionen ihres jeweiligen Gerätes zuständig ist.

Wenn die zwei Verwaltungseinheiten jeweilige Schritte (b), (c) und (d) bzw. (b'), (c') und (d') gleichzeitig ausführen, kann es vorkommen, dass beide Geräte in gleichzeitig ausgeführten Schritten (d) und (d') jeweils gerade solche Funktionen identifizieren, die ein verbotenes Paar bilden. Um daraus resultierende Probleme zu vermeiden, kann vorgesehen werden, dass von den beiden identifizierten Funktionen jeweils nur die erste gestartet wird, während der identifizierten zweiten Funktion ein Startbefehl verwehrt wird. Wenn anschließend die zweite Verwaltungseinheit, deren Funktion nicht gestartet wurde, den Schritt (d') wiederholt, kann sie die nun laufende Funktion des ersten Geräts berücksichtigen.

Anstatt bei Gleichzeitigkeit generell der identifizierten zweiten Funktion den Start zu verwehren, kann auch zuvor geprüft werden, ob die von den beiden Verwaltungseinheiten gleichzeitig identifizierten Funktionen ein verbotenes Paar bilden, und nur wenn dies der Fall ist, wird die zweite Funktion verworfen.

Es kann vorgesehen sein, dass jede der Verwaltungseinheiten wenigstens solche von ihr gestarteten Funktionen sowie deren Beendigung an die jeweils andere Verwaltungseinheit meldet, die mit wenigstens einer Funktion der jeweils anderen Verwaltungseinheit ein verbotenes Paar bilden. Indem jede Verwaltungseinheit über den Start und die Beendigung von Funktionen anderer Verwaltungseinheiten in Kenntnis gesetzt wird, kann jede Verwaltungsein-heit, ohne weitere Anfragen tätigen zu müssen, bei der Auswahl der Funktionen im Schritt (c) bzw. (c') jederzeit solche unberücksichtigt lassen, die mit gerade laufenden Funktionen ein verbotenes Paar bilden. Dabei ist es einerseits möglich, jeden Start und jede Beendigung einer jeden Funktion den jeweiligen anderen Verwaltungseinheiten mitzuteilen, oder andererseits nur Start und Beendigung solcher Funktionen, die mit anderen Funktionen verbotene Paare bilden.

Anstelle des Vollzugs von Start und Beendigung von Funktionen kann jede der Verwaltungseinheiten jeden beabsichtigten Start einer Funktion an die jeweils andere Verwaltungseinheit melden oder aber einen beabsichtigten Start von nur solchen Funktionen melden, die im Schritt (a) mit wenigstens einer Funktion der jeweils anderen Verwaltungseinheit als verbotenes Paar festgelegt worden sind. Dann kann eine diese Meldung empfangende Verwaltungseinheit der meldenden Verwaltungseinheit eine Rückmeldung liefern, ob die von letzterer identifizierte und zu starten beabsichtigte Funktion mit einer durch die empfangende Verwaltungseinheit bereits gestarteten Funktion ein verbotenes Paar bildet. Wenn dem so ist, wird von der meldenden Verwaltungseinheit auf den beabsichtigten Start der Funktion verzichtet. Eine der Verwaltungseinheiten kann dabei als zentrale Verwaltungseinheit eingerichtet sein, bei der alle anderen Verwaltungseinheiten vor einem beabsichtigten Start einer ihrer jeweiligen Funktionen anfragen, ob die Funktion mit einer bereits ablaufenden Funktion ein verbotenes Paar bildet.

Vorteilhafterweise kann bei der Zuordnung des Prioritätswertes für jede erste Funktion bzw. jede zweite Funktion anhand von Werten bestimmter Betriebsparameter der Vorrichtung beurteilt werden, ob die erste bzw. zweite Funktion ausführbar ist oder nicht. Bei dieser Ausgestaltung findet die Auswahl von Funktionen mit höchstem Prioritätswert im Schritt (c) nur unter als ausführbar beurteilten Funktionen statt. Der Fall, dass eine Funktion aufgrund eines hohen Prioritätswertes ausgewählt wird, aber nicht gestartet werden kann, weil die für ihren Ablauf notwendigen Werte bestimmter Betriebsparameter der Vorrichtung nicht gegeben sind, ist daher ausgeschlossen.

Betriebsweisen oder Komponenten der Vorrichtung, deren Eigenschaften zum Zuordnen eines Prioritätswertes zu einer Funktion heranzuziehen sind, können so wie die verbotenen Paare bereits vom Hersteller festgelegt werden.

Damit beim Zuordnen der Prioritätswerte diese Eigenschaften berücksichtigt werden können, muss die jeweilige diese Zuordnung vornehmende Verwaltungseinheit eines der Geräte über die von auf dem jeweiligen anderen Gerät implementierten Diagnosefunktionen festgestellten Eigenschaften informiert werden. Ein die beiden Geräte verbindender Bus, über den solche Informationen übertragen werden, läuft dabei Gefahr, durch die Fülle an Informationen überlastet zu werden. Um die Datenübertragung zwischen den Geräten so gering wie möglich zu halten, werden daher bevorzugt von wenigstens einer der Verwaltungseinheiten nur solche von Diagnosefunktionen festgestellten Eigenschaften von Betriebsweisen oder Komponenten der Vorrichtung, die zum Zuordnen eines Prioritätswertes zu einer Funktion heranzuziehen sind, an die jeweils andere Verwaltungseinheit gemeldet.

Sofern bei Ausführung einer Diagnosefunktion ein Fehler festgestellt wird, der mehrere Ursachen haben kann, so kann wenigstens eine weitere Diagnosefunktion ausgeführt werden, um das Vorliegen wenigstens einer der Ursachen zu überprüfen. Beispielsweise kann die Ursache für einen von einer Diagnosefunktion festgestellten Fehler einer Betriebsweise oder Komponente der Vorrichtung dann, wenn die Diagnosefunktion für diese Überprüfung auf Messwerte eines Sensors zugreift, entweder darin liegen, dass diese Betriebsweise oder Komponente der Vorrichtung tatsächlich gestört ist oder dass der Sensor beschädigt ist. Um den angeblich festgestellten Fehler der Betriebsweise oder Komponente der Vorrichtung zu validieren, kann daher eine weitere Diagnosefunktion gestartet werden, die den Sensor auf Fehlerfreiheit überprüft. Stellt diese weitere Diagnosefunktion fest, dass der Sensor nicht beschädigt ist und korrekt arbeitet, so ist der von der Diagnosefunktion angeblich festgestellte Fehler der Betriebsweise oder Komponente der Vorrichtung bestätigt. Man erhält dadurch verlässlichere Aussagen über das Vorhandensein von Fehlern von Betriebsweisen oder Komponenten der Vorrichtung. Damit diese weitere Diagnosefunktion möglichst bald durchgeführt wird, wird zweckmäßigerweise ihr Prioritätswert hochgesetzt.

Sofern eine Funktion ausgeführt worden ist, kann ihr Prioritätswert zurückgestuft werden, um ein allzu häufiges Ausführen der Funktion zu vermeiden.

Das erste Gerät und das zweite Gerät können jeweils um Mikrocontroller herum aufgebaut sein, wobei die Verwaltungseinheit auf einem der beiden Mikrocontroller unter Beanspruchung eines Teils von dessen Verarbeitungsressourcen implementiert ist. Es können darüber hinaus auch beide Mikrocontroller identisch sein. Dies kann beispielsweise dann der Fall sein, wenn für beide Geräte jeweils eine eigene Verwaltungseinheit vorgesehen ist.

Ferner kann das System einen Zwischenpuffer umfassen, in welchem Meldungen über den Start oder das Beenden einer Funktion oder eine Absicht zum Starten einer Funktion zwischengespeichert werden können. Auf diesen Zwischenpuffer können dann solche Verwaltungseinheiten, die über einen Start einer Funktion zu entscheiden haben, zugreifen und anhand der darin gespeicherten Informationen den Start der betreffenden Funktion genehmigen oder ihn verweigern.

Besonders bevorzugt umfasst das System eine von den Geräten gesteuerte Vorrichtung. Dabei handelt es sich bei dieser Vorrichtung besonders bevorzugt um einen Motor, insbesondere einen Verbrennungsmotor eines Kraftfahrzeuges.

Ebenfalls besonders bevorzugt umfasst das System einen CAN-Bus. Ein solcher Bus wird bereits in vielen Kraftfahrzeugen eingesetzt und kann daher ohne zusätzliche Kosten vorteilhafterweise für das erfindungsgemäße Verfahren bzw. System mit genutzt werden.

Bevorzugte Ausführungsbeispiele der Erfindung werden im folgenden unter Zuhilfenahme von Zeichnungen näher erläutert. Es zeigen:
- Fig. 1: eine schematische Darstellung eines ersten erfindungsgemäßen Systems;
- Fig. 2: ein Flussdiagramm zur Steuerung von Diagnosefunktionen für das System der Fig. 1;
- Fig. 3: ein zweites Flussdiagramm zur Steuerung von Diagnosefunktionen für ein abgewandeltes System;
- Fig. 4: eine schematische Darstellung eines zweiten erfindungsgemäßen Systems; und
- Fig. 5: ein Flussdiagramm zur Steuerung von Diagnosefunktionen für das System der Fig. 4.

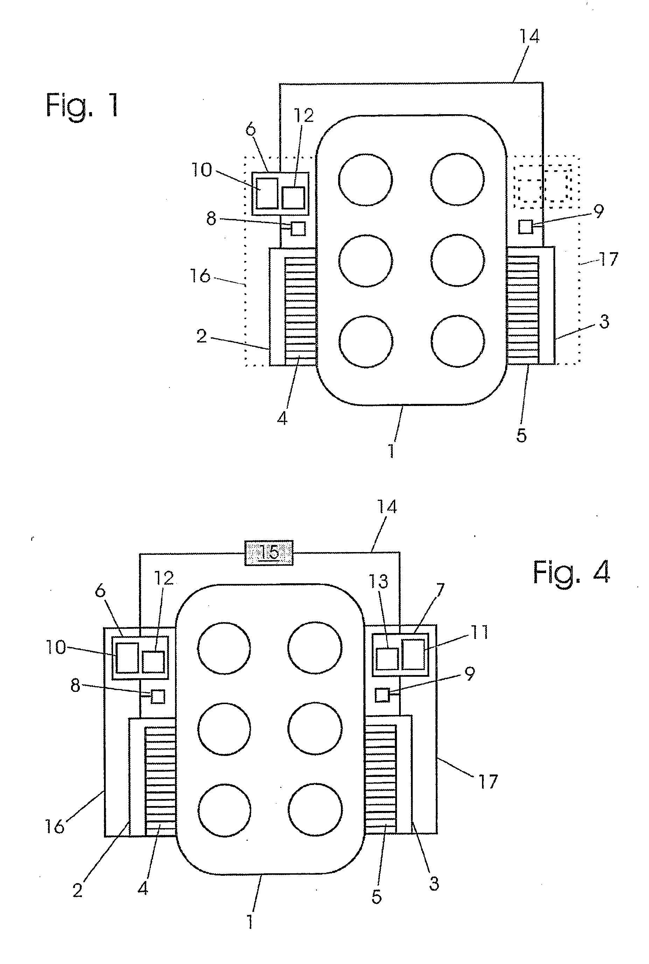

Das in Fig. 1 schematisch dargestellte System umfasst einen Verbrennungsmotor 1, der von zwei Steuergeräten 2, 3 gesteuert ist. Auf dem Steuergerät 2 ist eine Mehrzahl von Diagnosefunktionen 4 und auf dem Steuergerät 3 eine Mehrzahl von Diagnosefunktionen 5 implementiert. Eine Verwaltungseinheit 6 steht über einen CAN-Bus 14 mit beiden Steuergeräten 2, 3 in Verbindung. Die Verwaltungseinheit 6 weist ein Rechenmodul 10 und einen Validator 12 auf. Jedem Steuergerät 2, 3 ist jeweils ein Fehlerpuffer 8, 9 zugeordnet, auf welchen das jeweilige Steuergerät 2, 3 sowie die Verwaltungseinheit 6 Zugriff haben.

Der Betrieb des Verbrennungsmotors 1 wird zum Teil vom Steuergerät 2 und zum Teil vom Steuergerät 3 gesteuert. Dabei laufen auf dem Verbrennungsmotor 1 und dessen Komponenten unterschiedliche Prozesse und Funktionen ab. Diese Funktionen können den Verbrennungsmotor 1 als ganzes betreffen oder aber auch nur Teile oder Komponenten des Verbrennungsmotors 1. Um ein fehlerfreies Funktionieren des Verbrennungsmotors 1 zu gewährleisten, müssen diese Funktionen permanent kontrolliert und überwacht werden. Für diese Aufgabe sind die Diagnosefunktionen 4, 5 zuständig. Unter den Diagnosefunktionen 4, 5 gibt es welche, die nur bei spezifischen Werten diverser Betriebsparameter des Verbrennungsmotors 1, wie z. B. einer bestimmten Temperatur oder Drehzahl, lauffähig sind. Außerdem gibt es unter den auf dem Steuergerät 2 implementierten Diagnosefunktionen 4 gewisse Diagnosefunktionen 4, die einige der auf dem Steuergerät 3 implementierten Diagnosefunktionen 5 bei gleichzeitigem Ablaufen störend beeinflussen, so dass letztere ein falsches Ergebnis liefern. Es ist daher notwendig, ein gleichzeitiges Ablaufen zweier solcher Diagnosefunktionen 4, 5 zu vermeiden.

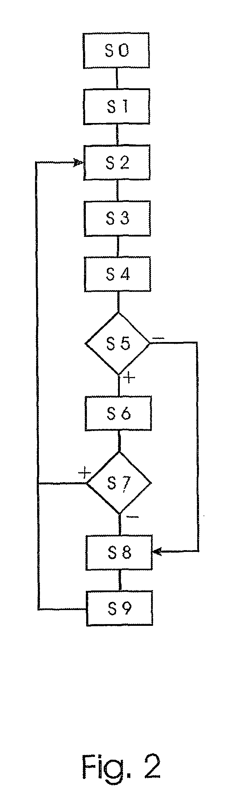

Ein Verfahren zur Steuerung des Ablaufes der Diagnosefunktionen 4, 5 ist im Flussdiagramm der Fig. 2 dargestellt. Der Schritt S0 markiert dabei den Start des Verfahrens. Im darauffolgenden Schritt S1 werden alle kritischen Paare von Diagnosefunktionen 4, 5, von denen wenigstens eine bei gleichzeitiger Ausführung die andere störend beeinflusst, ermittelt, und als verbotene Paare innerhalb einer Exklusionsmatrix festgelegt, die im Rechenmodul 10 gespeichert ist.

Das Rechenmodul 10 berechnet im Schritt S2 für jede Diagnosefunktion 4, 5 einen Prioritätswert und ordnet ihn der jeweiligen Diagnosefunktion 4, 5 zu. Bei der Berechnung eines Prioritätswertes einer Diagnosefunktion 4, 5 kann beispielsweise unter anderem eine seit einer letzten Ausführung der entsprechenden Diagnosefunktion 4, 5 verstrichene Zeitdauer berücksichtigt werden. Einer Diagnosefunktion 4, 5 kann dabei zum Beispiel ein um so höherer Prioritätswert zugeordnet werden, je länger eine letztmalige Ausführung dieser Diagnosefunktion 4, 5 zurückliegt.

Nach Zuordnen der Prioritätswerte wählt die Verwaltungseinheit 6 im Schritt S3 eines der Steuergeräte 2, 3 aus. Die Verwaltungseinheit 6 kann beispielsweise dasjenige Steuergerät 2, 3 mit den meisten gegenwärtig ungenutzten Verarbeitungskapazitäten auswählen. Zur Vereinfachung der Beschreibung sei ohne Beschränkung der Allgemeinheit angenommen, dass die Verwaltungseinheit 6 im Schritt S3 das Steuergerät 2 auswählt.

Aus den auf dem Steuergerät 2 implementierten Diagnosefunktionen 4 wählt das Rechenmodul 10 im anschließenden Schritt S4 diejenigen aus, die von allen Diagnosefunktionen 4 den höchsten Prioritätswert haben und die gleichzeitig bei den aktuellen Werten der Betriebsparameter des Verbrennungsmotors 1 ausführbar sind.

Es folgt im Schritt S5 eine Entscheidung darüber, ob momentan eine Diagnosefunktion 5 des Steuergeräts 3 in Ausführung befindlich ist. Ist dies nicht der Fall, fährt das Verfahren mit dem weiter unten beschriebenen Schritt S8 fort. Läuft eine Diagnosefunktion 5 aktuell ab, bildet das Rechenmodul 10 im Schritt S6 mit jeder einzelnen der in Schritt S4 ausgewählten lauffähigen Diagnosefunktionen 4 und der aktuell ablaufenden Diagnosefunktion 5 Paare, vergleicht diese im folgenden Schritt S7 mit den in der Exklusionsmatrix verzeichneten verbotenen Paaren und sondert aus den in Schritt S4 ausgewählten Diagnosefunktionen 4 jede aus, die mit der aktuell ausgeführten Diagnosefunktion 5 ein solches verbotenes Paar bildet. Wenn dabei alle in Schritt S4 ausgewählten lauffähigen Diagnosefunktion 4 ausgesondert werden, springt das Verfahren vom Schritt S7 zu Schritt S2 zurück. Sofern wenigstens eine der in Schritt S4 ausgewählten Diagnosefunktionen 4 verbleibt, die mit keiner der aktuell ablaufenden Diagnosefunktionen 5 ein verbotenes Paar bildet, fährt das Verfahren mit Schritt S8 fort, wo aus den verbliebenen Diagnosefunktionen 4 jeweils eine Diagnosefunktion 4 vom Rechenmodul 10 identifiziert wird. In dem zuvor erwähnten Fall, bei dem im Schritt S5 keine aktuell laufende Diagnosefunktion 5 festgestellt wird und daraufhin mit dem Schritt 38 fortgefahren wird, wird eine der im Schritt S3 ausgewählten Diagnosefunktionen 4 im Schritt S8 identifiziert. Schließlich wird die jeweilige im Schritt S8 identifizierte Diagnosefunktion 4 im Schritt S9 gestartet. Das Verfahren fährt mit einer Wiederholung der Schritte ab Schritt S2 fort. Im Falle, dass im Schritt S3 das Steuergerät 3 ausgewählt wird, werden im Schritt S4 unter den Diagnosefunktionen 5 solche mit höchstem Prioritätswert ausgewählt und das Verfahren läuft mit den ausgewählten Diagnosefunktionen 5 statt den ausgewählten Diagnosefunktionen 4 wie eben beschrieben ab.

Jede auf diese Weise gestartete und laufende Diagnosefunktion 4, 5 überprüft dabei eine andere auf dem Verbrennungsmotor 1 ablaufende Funktion bzw. eine Komponente des Verbrennungsmotors 1. Sofern eine der Diagnosefunktionen 4, 5 einen Fehler bei der von ihr überprüften Funktion bzw. Komponente feststellt, vermerkt sie diesen Fehler in dem Fehlerpuffer 8, 9, welcher dem Steuergerät 2, 3, auf dem sie implementiert ist, zugeordnet ist. Eine der Diagnosefunktionen 4, 5, die einen Fehler gefunden hat, wird im Folgenden mit 4' bzw. 5' bezeichnet. Die Einträge im Fehlerpuffer 9 können bei Bedarf über den CAN-Bus 14 in den Fehlerpuffer 8 übertragen werden, ohne dabei jedoch im Fehlerpuffer 9 gelöscht zu werden. Dies kann deswegen notwendig sein, weil es unter den auf dem Verbrennungsmotor 1 ablaufenden Funktionen unter anderem solche gibt, die auf nur einen der Fehlerpuffer 8, 9 zugreifen können, jedoch eventuell auf im anderen Fehlerpuffer 8, 9 enthaltene Fehlereinträge angewiesen sind.

Die Fehlereinträge der Fehlerpuffer 8, 9 werden darüber hinaus bei der Berechnung der Prioritätswerte für die Diagnosefunktionen 4, 5 im Schritt S2 berücksichtigt. Betrifft nämlich ein Fehlereintrag eine schadhafte Komponente des Verbrennungsmotors 1, die von einer der Diagnosefunktionen 4, 5 benötigt wird, so kann diese betreffende Diagnosefunktion 4, 5 aufgrund der schadhaften Komponente kein richtiges Ergebnis mehr liefern. In einem solchen Fall wird dieser Diagnosefunktion 4, 5 im Schritt S2 ein so niedriger Prioritätswert zugeordnet, dass die Ausführung der Diagnosefunktion 4, 5 dadurch gesperrt ist. Für die Berücksichtigung der Fehlereinträge bei der Festlegung der Prioritätswerte kann eine vorgegebene Sperrmatrix eingesetzt werden, die zu jedem Fehlereintrag zu sperrenden Diagnosefunktionen 4, 5 spezifiziert.

Für einen von einer Diagnosefunktion 4', 5' gefundenen Fehler kann es unterschiedliche Ursachen geben. Es kann beispielsweise tatsächlich ein Fehler der überprüften Funktion oder Komponente des Verbrennungsmotors 1 vorliegen; eine Fehlermeldung durch eine Diagnosefunktion 4', 5' kann aber auch dadurch zustande kommen, dass eine von der betreffenden Diagnosefunktion 4', 5' verwendete Einrichtung wie beispielsweise eine Messsonde, schadhaft ist und falsche Messwerte an die Diagnosefunktion 4', 5' liefert. Aus diesem Grund ist der Validator 12 vorgesehen. Im Validator 12 ist eine Tabelle abgelegt, die für jede Diagnosefunktionen 4, 5 die von ihr verwendeten Komponenten bzw. Funktionen des Verbrennungsmotors 1 angibt. Sofern ein von einer Diagnosefunktion 4', 5' vermeintlich aufgefundener Fehler im Fehlerpuffer 8 vermerkt wird, bestimmt der Validator 12 anhand der Tabelle die von dieser Diagnosefunktion 4', 5' verwendeten Komponenten bzw. Funktionen und fordert beim Rechenmodul 10 die Ausführung von Diagnosefunktionen 4'', 5'' zur Überprüfung dieser Komponenten bzw. Funktionen an. Dies wird vom Rechenmodul 10 im Schritt S2 bei der Berechnung der Prioritätswerte dadurch berücksichtigt, dass es die Prioritätswerte der angeforderten Diagnosefunktionen 4'', 5'' hochsetzt, so dass diese alsbald ausgeführt werden. Wenn diese Diagnosefunktionen 4", 5'' ein korrektes Funktionieren der von ihnen überprüften Komponenten feststellen, wird der Fehler vom Validator 12 im Fehlerpuffer 8 als überprüft gekennzeichnet. Stellt eine der Diagnosefunktionen 4", 5'' eine fehlerhafte Komponente oder Funktion fest, so wird dies als Ursache des von der Diagnosefunktion 4' oder 5' festgestellten Fehlers angesehen, der Eintrag für die Diagnosefunktion 4', 5' wird als Folgefehler gekennzeichnet und der entsprechende ursächliche Fehler wird eingetragen. So kann ein Techniker anhand des Inhalts der Fehlerpuffer 8 bzw. 9 eine Störungsursache schnell erkennen und beseitigen.

In Abwandlung des in Fig. 1 dargestellten Systems ist es möglich, die Verwaltungseinheit 6, das Steuergerät 2 und den Fehlerpuffer 8 durch einen einzigen Mikrocontroller 16 zu bilden, der in Fig. 1 als punktierter Umriss angedeutet ist.

Einer weiteren Abwandlung zufolge ist auch das Steuergeräte 3 durch einen Mikrocontroller 17 gebildet. Dieser ist mit dem Mikrocontroller 16 baugleich, verfügt also wie dieser über eine Verwaltungseinheit mit Rechenmodul und Validator. Da diese Verwaltungseinheit für den beschriebenen Betrieb des Systems nicht benötigt wird, ist sie deaktiviert und deshalb gestrichelt dargestellt. Auf diese Weise lässt sich das in Fig. 1 gezeigte System mittels zweier bekannter Mikrocontroller mit Steuereinheit, Verwaltungseinheit und Fehlerpuffer, wie sie bei bekannten Verbrennungsmotoren jeweils einzeln zur Steuerung des Verbrennungsmotors eingesetzt werden, ausführen.

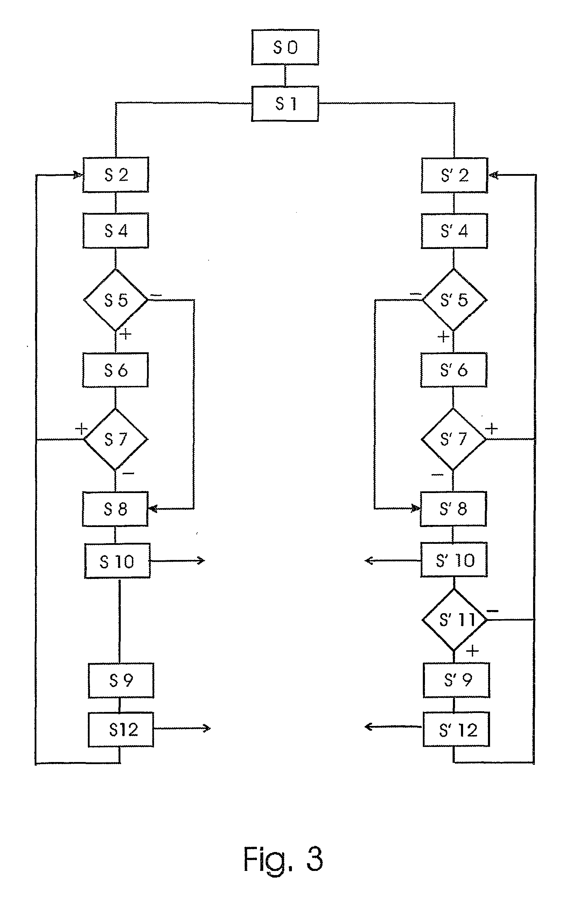

Fig. 3 zeigt ein Flussdiagramm eines Ablaufsteuerungsverfahrens, das bei einem System mit zwei identischen Mikrocontrollern 16, 17 anwendbar ist, deren Verwaltungseinheiten 6, 7 aktiv sind. Wie im Flussdiagramm der Fig. 2 markiert der Schritt S0 den Start des Verfahrens. Ebenfalls analog zu Fig. 2 werden im Schritt S1 verbotene Paare festgelegt. Diese werden nun allerdings in den Rechenmodulen 10, 11 beider Verwaltungseinheiten 6, 7 als Exklusionsmatrizen abgelegt.

Die folgenden Schritte S2 bis S8 werden von der Verwaltungseinheit 6 für die Diagnosefunktionen 4, die entsprechenden Schritte S'2 bis S'8 von der Verwaltungseinheit 7 für die Diagnosefunktionen 5 ausgeführt. Es handelt sich bei den Schritten S2 bis S8 bzw. S'2 bis S'8 um die gleichen Verfahrensschritte, wie sie im Hinblick auf Fig. 2 oben beschrieben sind. Lediglich der Schritt S3 des Flussdiagramms der Fig. 2 entfällt beim Flussdiagramm der Fig. 3, weil keines der Steuergeräte 2, 3 mehr ausgewählt werden muss.

Nach erfolgter Identifizierung einer Diagnosefunktion 4 bzw. 5 im Schritt S8 bzw. im Schritt S'8 meldet die Verwaltungseinheit 2 bzw. 3 in Schritt S10 bzw. S'10 die identifizierte Diagnosefunktion an die andere Verwaltungseinheit. Die Verwaltungseinheit 7 speichert die empfangene Meldung, egal an welchem Schritt des Verfahrens sie sich befindet, um sie bei der nächsten Durchführung des Schritts S'6 zu berücksichtigen. Die Verwaltungseinheit 6 speichert die empfangene Meldung nur, wenn sie sich nicht am Schritt S10 befindet, d.h. der Empfang der Meldung sich nicht mit einer selbst gesendeten Meldung überschneidet. Wenn sich die zwei Meldungen überschneiden, verwirft außerdem in Schritt S'11 die Verwaltungseinheit 7 die von ihr identifizierte Diagnosefunktion und kehrt zu Schritt S'2 zurück.

In Schritt S9 bzw. S'9 starten die Verwaltungseinheiten jeweils die von ihnen identifizierte Diagnosefunktion.

Der Abschluss einer Diagnosefunktion wird jeweils in Schritt S12 bzw. S'12 an die jeweils andere Verwaltungseinheit gemeldet.

In Fig. 4 ist eine weitere Ausgestaltung des Systems mit zwei identischen Mikrocontrollern 16 und 17 gezeigt. Auf dem Mikrocontroller 16 sind ein Steuergerät 2 und eine Verwaltungseinheit 6 sowie ein Fehlerpuffer 8 in der in Fig. 1 beschriebenen Ausgestaltung vorgesehen. Entsprechend umfasst der Mikrokontroller 17 ein Steuergerät 3 mit Diagnosefunktionen 5, eine Verwaltungseinheit 7 mit Rechenmodul 11 und Validator 13, und ein Fehlerpuffer 9. Über den CAN-Bus ist ein Zwischenpuffer 15 von beiden Verwaltungseinheiten 6, 7 erreichbar.

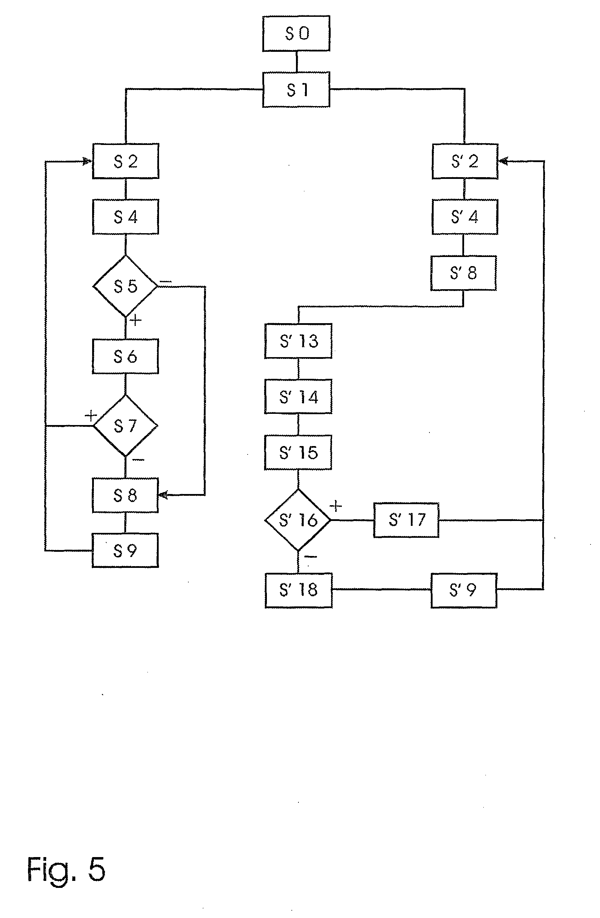

Die Ablaufsteuerung der Diagnosefunktionen 4, 5 erfolgt nach dem in Fig. 5 dargestellten Verfahren. Die Schritte S0 und S1 erfolgen für beide Mikrocontroller 16, 17 wie für die Fig. 3 beschrieben. Ebenso laufen die Schritte S2 bis S8 analog wie die entsprechenden Schritte der Fig. 3 für den Mikrocontroller 16 ab, d.h. mittels dieser Verfahrensschritte wird der Ablauf der Diagnosefunktionen 4 gesteuert. Die auf dem Mikrocontroller 17 ablaufenden Schritte S'2, S'4 und S'8 sind den Schritten S2, S4 und S8 analog. Danach wird eine im Schritt S'4 ausgewählte Diagnosefunktion 5 im unmittelbar darauffolgenden Schritt S'8 identifiziert. Im nach-folgenden Schritt S'13 jedoch wird eine Information über die im Schritt S'8 identifizierte, zu starten beabsichtigte Diagnosefunktion 5 in den Zwischenpuffer 15 geschrieben. Die Verwaltungseinheit 6 liest diese Information im Schritt S'14 aus dem Zwischenpuffer 15 aus, bildet im Schritt S'15 mit dieser identifizierten Diagnosefunktion 5 und allen aktuell laufenden Diagnosefunktionen 4 Paare und prüft im Schritt S'16, ob die von der Verwaltungseinheit 7 zu starten beabsichtigte identifizierte Diagnosefunktion 5 mit einer gerade laufenden Diagnosefunktion 4 ein verbotenes Paar bildet. Trifft dies zu, so teilt sie dies im Schritt S'17 über den CAN-Bus 14 der Verwaltungseinheit 7 mit und verweigert eine Startfreigabe für die identifizierte Diagnosefunktion 5. Das Verfahren fährt in diesem Fall wieder mit Schritt S'2 fort. Im anderen Fall, bei dem die von der Verwaltungseinheit 7 zu starten beabsichtigte identifizierte Diagnosefunktion 5 mit einer gerade laufenden Diagnosefunktion 4 kein verbotenes Paar bildet, gibt die Verwaltungseinheit 6 im Schritt S'18 eine Startfreigabe für die identifizierte Diagnosefunktion 5, woraufhin diese im Schritt S'9 von der Verwaltungseinheit 7 gestartet wird. Somit ist bei der in Fig. 4 gezeigten Ausführung des erfindungsgemäßen Systems die Verwaltungseinheit 6 als der Verwaltungseinheit 7 übergeordnet vorgesehen, so dass die Verwaltungseinheit 7 zum Starten einer von ihr identifizierten Diagnosefunktion 5 bei der Verwaltungseinheit 6 eine Erlaubnis dafür einholen muss.

## Patentansprüche

1. Verfahren zur Ablaufsteuerung einer Mehrzahl von mit einer Vorrichtung (1) wechselwirkenden Funktionen (4, 5), die auf wenigstens zwei miteinander wechselwirkenden, die Vorrichtung (1) steuernden Geräten (2, 3) ausführbar sind, wobei wenigstens eine der Funktionen (4, 5) eine Diagnosefunktion ist, mit der wenigstens eine Betriebsweise oder wenigstens eine Komponente der Vorrichtung (1) überprüft wird, und wobei erste der Funktionen (4, 5) auf einem ersten der Geräte (2, 3) und zweite der Funktionen (4, 5) auf einem zweiten der Geräte (2, 3) implementiert sind, bei dem
(a) verbotene Paare aus einer ersten und einer zweiten Funktion (4, 5) festgelegt werden, von denen bei gleichzeitiger Ausführung wenigstens eine die andere störend beeinflusst;
(b) jeder ersten Funktion (4, 5) ein Prioritätswert zugeordnet wird, wobei zum Zuordnen des Prioritätswertes zu wenigstens einer der ersten Funktionen ein von der ausgeführten Diagnosefunktion festgestellter Fehler der wenigstens einen Betriebsweise oder wenigstens einen Komponente der Vorrichtung (1) herangezogen wird;
(c) unter den ersten Funktionen (4, 5) solche ausgewählt werden, die den höchsten Prioritätswert aufweisen, wobei, wenn eine zweite Funktion (4, 5) ausgeführt wird, diejenigen ersten Funktionen (4, 5) bei der Auswahl unberücksichtigt bleiben, die mit der laufenden zweiten Funktion (4, 5) ein verbotenes Paar bilden;
(d) eine verbliebene ausgewählte erste Funktion (4, 5) identifiziert wird; und
(e) die identifizierte Funktion (4, 5) gestartet wird.

2. Verfahren nach Anspruch 1, **dadurch gekennzeichnet, dass** die Schritte (b), (c) und (d) von einer allen Geräten (2, 3) gemeinsamen Verwaltungseinheit (6, 7) ausgeführt werden.

3. Verfahren nach Anspruch 1, **dadurch gekennzeichnet, dass** eine zum ersten Gerät (2, 3) gehörende erste Verwaltungseinheit (6, 7) die Schritte (b), (c) und (d) ausführt, während von einer zum zweiten Gerät (2, 3) gehörenden zweiten Verwaltungseinheit (6, 7)
(b') jeder zweiten Funktion (4, 5) ein Prioritätswerte zugeordnet wird;
(c') unter den zweiten Funktionen (4, 5) solche ausgewählt werden, die den höchsten Prioritätswert aufweisen, wobei, wenn eine erste Funktion (4, 5) ausgeführt wird, diejenigen zweiten Funktionen (4, 5) bei der Auswahl unberücksichtigt bleiben, die mit der laufenden ersten Funktion (4, 5) ein verbotenes Paar bilden;
(d') eine verbliebene ausgewählte zweite Funktion (4, 5) identifiziert wird; und
(e') die im Schritt (d') identifizierte Funktion (4, 5) gestartet wird.

4. Verfahren nach Anspruch 3, **dadurch gekennzeichnet, dass** wenn in den Schritten (d) und (d') gleichzeitig eine erste und eine zweite Funktion (4, 5) identifiziert werden, geprüft wird, ob diese beiden Funktionen (4, 5) ein verbotenes Paar bilden, und wenn ja, nur eine der identifizierten Funktionen (4, 5) gestartet wird.

5. Verfahren nach einem der Ansprüche 3 oder 4, **dadurch gekennzeichnet, dass** jede der Verwaltungseinheiten (6, 7) wenigstens solche in den Schritten (e) bzw. (e') gestartete Funktionen (4, 5) sowie deren Beendigung an die jeweils andere Verwaltungseinheit (6, 7) meldet, die mit wenigstens einer Funktion (4, 5) der jeweils anderen Verwaltungseinheit (6, 7) ein verbotenes Paar bilden.

6. Verfahren nach einem der Ansprüche 3 bis 5, **dadurch gekennzeichnet, dass** jede der Verwaltungseinheiten (6, 7) einen beabsichtigten Start wenigstens solcher Funktionen (4, 5) an die jeweils andere Verwaltungseinheit (6, 7) meldet, die mit wenigstens einer Funktion (4, 5) der jeweils anderen Verwaltungseinheit (6, 7) ein verbotenes Paar bilden.

7. Verfahren nach einem der vorhergehenden Ansprüche, **dadurch gekennzeichnet, dass** im Schritt (c) für jede erste Funktion (4, 5) bzw. im Schritt (c') für jede zweite Funktion (4, 5) anhand von Werten bestimmter Betriebsparameter der Vorrichtung (1) beurteilt wird, ob die erste bzw. zweite Funktion (4, 5) ausführbar ist oder nicht, und diejenigen ersten bzw. zweiten Funktionen (4, 5) ausgewählt werden, die den höchsten Prioritätswert aufweisen und als ausführbar beurteilt werden.

8. Verfahren nach einem der vorhergehenden Ansprüche, **dadurch gekennzeichnet, dass** von wenigstens einer der Verwaltungseinheiten (6, 7) nur solche von Diagnosefunktionen (4, 5) festgestellten Eigenschaften von Betriebsweisen oder Komponenten der Vorrichtung (1), die zum Zuordnen eines Prioritätswertes zu einer Funktion (4, 5) im Schritt (b) bzw. im Schritt (b') heranzuziehen sind, an die jeweils andere Verwaltungseinheit (6, 7) gemeldet werden.

9. Verfahren nach einem der vorhergehenden Ansprüche, **dadurch gekennzeichnet, dass** dann, wenn bei Ausführung einer Diagnosefunktion (4, 5) ein Fehler festgestellt wird, der mehrere Ursachen haben kann, wenigstens eine weitere Diagnose-funktion (4, 5) ausgeführt wird, um das Vorliegen wenigstens einer der Ursachen zu überprüfen.

10. Verfahren nach Anspruch 9, **dadurch gekennzeichnet, dass** zum alsbaldigen Start der weiteren Diagnosefunktion (4, 5) zur Überprüfung des Vorliegens der Ursache der Prioritätswert dieser weiteren Diagnosefunktion (4, 5) hochgesetzt wird.

11. Verfahren nach einem der vorhergehenden Ansprüche, **dadurch gekennzeichnet, dass** ein Prioritätswert einer Funktion (4, 5) nach deren Ausführung zurückgestuft wird.

12. System zur Ausführung eines Verfahrens nach einem der vorhergehenden Ansprüche, mit wenigstens zwei miteinander wechselwirkenden, eine Vorrichtung (1) steuernden Geräten (2, 3) mit auf diesen ausführbaren, mit der Vorrichtung (1) wechselwirkenden Funktionen (4, 5), wobei wenigstens eine der Funktionen (4, 5) eine Diagnosefunktion ist, mit der wenigstens eine Betriebsweise oder wenigstens eine Komponente der Vorrichtung (1) überprüft wird, und wobei erste der Funktionen (4, 5) auf einem ersten der Geräte (2, 3) und zweite der Funktionen (4, 5) auf einem zweiten der Geräte (2, 3) implementiert sind und wenigstens eine Verwaltungseinheit (6, 7) einen Ablauf der Funktionen (4, 5) derart steuert, dass sie ein gleichzeitiges Ablaufen einer ersten Funktion (4, 5) und einer zweiten Funktion (4, 5), die sich gegenseitig störend beeinflussen, vermeidet.

13. System nach Anspruch 12, **dadurch gekennzeichnet, dass** das erste Gerät (2, 3) und das zweite Gerät jeweils um Mikrocontroller (16, 17) herum aufgebaut sind, wobei die Verwaltungseinheit (6, 7) auf einem der beiden Mikrocontroller (16, 17) unter Beanspruchung eines Teils seiner Verarbeitungsressourcen implementiert ist.

14. System nach Anspruch 13, **gekennzeichnet durch** identische Mikrocontroller (16, 17).

15. System nach einem der Ansprüche 13 oder 14, **gekennzeichnet durch** einen Zwischenpuffer (15) zum Zwischenspeichern der Meldungen gemäß den Ansprüchen 5 oder 6.

16. System nach einem der Ansprüche 12 bis 15, **gekennzeichnet durch** eine von den Geräten (2, 3) gesteuerte Vorrichtung (1).

17. System nach Anspruch 16, **dadurch gekennzeichnet, dass** die Vorrichtung ein Motor (1), insbesondere ein Verbrennungsmotor, ist.

18. System nach einem der Ansprüche 12 bis 17, **gekennzeichnet durch** einen CAN-Bus (14).

## Claims

1. Method for controlling the sequence of a plurality of functions (4, 5) which interact with an apparatus (1) and can be executed on at least two devices (2, 3) which interact with one another and control the apparatus (1), at least one of the functions (4, 5) being a diagnostic function which is used to check at least one operating mode or at least one component of the apparatus (1), and first of the functions (4, 5) being implemented on a first of the devices (2, 3) and second of the functions (4, 5) being implemented on a second of the devices (2, 3), in which
(a) prohibited pairs of a first function and a second function (4, 5) are defined, at least one of which has a disruptive effect on the other when executed at the same time;
(b) a priority value is associated with each first function (4, 5), a fault in the at least one operating mode or at least one component of the apparatus (1), as determined by the diagnostic function executed, being used to associate the priority value with at least one of the first functions;
(c) those functions which have the highest priority value are selected from the first functions (4, 5), in which case, if a second function (4, 5) is executed, those first functions (4, 5) which form a prohibited pair with the running second function (4, 5) are not taken into account in the selection;
(d) a remaining selected first function (4, 5) is identified; and
(e) the identified function (4, 5) is started.

2. Method according to Claim 1, **characterized in that** steps (b), (c) and (d) are carried out by a management unit (6, 7) common to all devices (2, 3).

3. Method according to Claim 1, **characterized in that** a first management unit (6, 7) belonging to the first device (2, 3) carries out steps (b), (c) and (d), while a second management unit (6, 7) belonging to the second device (2, 3)
(b') associates a priority value with each second function (4, 5);
(c') selects those functions which have the highest priority value from the second functions (4, 5), in which case, if a first function (4, 5) is executed, those second functions (4, 5) which form a prohibited pair with the running first function (4, 5) are not taken into account in the selection;
(d') identifies a remaining selected second function (4, 5); and
(e') starts the function (4, 5) identified in step (d').

4. Method according to Claim 3, **characterized in that**, if a first function and a second function (4, 5) are identified at the same time in steps (d) and (d'), a check is carried out in order to determine whether these two functions (4, 5) form a prohibited pair and, if so, only one of the identified functions (4, 5) is started.

5. Method according to either of Claims 3 and 4, **characterized in that** each of the management units (6, 7) reports at least those functions (4, 5) which are started in steps (e) and (e') and form a prohibited pair with at least one function (4, 5) of the respective other management unit (6, 7) and the completion of said functions to the respective other management unit (6, 7).

6. Method according to one of Claims 3 to 5, **characterized in that** each of the management units (6, 7) reports an intended start of at least those functions (4, 5) which form a prohibited pair with at least one function (4, 5) of the respective other management unit (6, 7) to the respective other management unit (6, 7).

7. Method according to one of the preceding claims, **characterized in that** values of particular operating parameters of the apparatus (1) are used, in step (c) for each first function (4, 5) and in step (c') for each second function (4, 5), to assess whether or not the first or second function (4, 5) can be executed, and those first or second functions (4, 5) which have the highest priority value and are assessed to be executable are selected.

8. Method according to one of the preceding claims, **characterized in that** at least one of the management units (6, 7) reports only those properties of operating modes or components of the apparatus (1) which are determined by diagnostic functions (4, 5) and can be used to associate a priority value with a function (4, 5) in step (b) and in step (b') to the respective other management unit (6, 7).

9. Method according to one of the preceding claims, **characterized in that**, when a fault which may have a plurality of causes is determined when executing a diagnostic function (4, 5), at least one further diagnostic function (4, 5) is executed in order to check the presence of at least one of the causes.

10. Method according to Claim 9, **characterized in that**, in order to immediately start the further diagnostic function (4, 5) for the purpose of checking the presence of the cause, the priority value of this further diagnostic function (4, 5) is increased.

11. Method according to one of the preceding claims, **characterized in that** a priority value of a function (4, 5) is reduced after the function has been executed.

12. System for carrying out a method according to one of the preceding claims, having at least two devices (2, 3) which interact with one another, control an apparatus (1) and have functions (4, 5) which can be executed on said devices and interact with the apparatus (1), at least one of the functions (4, 5) being a diagnostic function which is used to check at least one operating mode or at least one component of the apparatus (1), and first of the functions (4, 5) being implemented on a first of the devices (2, 3) and second of the functions (4, 5) being implemented on a second of the devices (2, 3), and at least one management unit (6, 7) controlling a sequence of the functions (4, 5) in such a manner that it avoids a first function (4, 5) and a second function (4, 5), which have a disruptive effect on one another, running at the same time.

13. System according to Claim 12, **characterized in that** the first device (2, 3) and the second device are each constructed around microcontrollers (16, 17), the management unit (6, 7) being implemented on one of the two microcontrollers (16, 17) while using some of its processing resources.

14. System according to Claim 13, **characterized by** identical microcontrollers (16, 17).

15. System according to either of Claims 13 and 14, **characterized by** an intermediate buffer (15) for buffering the messages according to Claim 5 or 6.

16. System according to one of Claims 12 to 15, **characterized by** an apparatus (1) controlled by the devices (2, 3).

17. System according to Claim 16, **characterized in that** the apparatus is an engine (1), in particular an internal combustion engine.

18. System according to one of Claims 12 to 17, **characterized by** a CAN bus (14).

## Revendications

1. Procédé de commande du déroulement de plusieurs fonctions (4, 5) qui interagissent avec un dispositif (1) et qui peuvent être exécutées sur au moins deux appareils (2, 3) coopérant l'un avec l'autre et commandant le dispositif (1),
au moins l'une des fonctions (4, 5) étant une fonction de diagnostic qui permet de vérifier le ou les modes de fonctionnement ou au moins un composant du dispositif (1),
des premières fonctions (4, 5) étant installées sur un premier des appareils (2, 3) et des deuxièmes fonctions (4, 5) étant installées sur un deuxième des appareils (2, 3), et dans lequel :
(a) des paires interdites d'une première et d'une deuxième fonction (4, 5) sont définies parmi celles qui perturbent au moins l'une des autres lorsqu'elles sont exécutées simultanément,
(b) une valeur de priorité est attribuée à chaque première fonction (4, 5), l'attribution de la valeur de priorité à au moins l'une des premières fonctions utilisant des erreurs constatées lors de l'exécution de la fonction de diagnostic du ou des modes de fonctionnement ou d'au moins un composant du dispositif (1),
(c) parmi les premières fonctions (4, 5), celles qui présentent la plus haute valeur de priorité sont sélectionnées et si une deuxième fonction (4, 5) est exécutée, les premières fonctions (4, 5) qui forment avec la deuxième fonction (4, 5) en cours une paire interdite restent non prises en compte dans la sélection,
(d) une première fonction (4, 5) restante et sélectionnée est identifiée et
(e) la fonction (4, 5) identifiée est lancée.

2. Procédé selon la revendication 1, **caractérisé en ce que** les étapes (b), (c) et (d) sont exécutées par une unité de gestion (6, 7) commune à tous les appareils (2, 3).

3. Procédé selon la revendication 1, **caractérisé en ce qu'**une unité de gestion (6, 7) qui appartient au premier appareil (2, 3) exécute les étapes (b), (c) et (d), tandis qu'une deuxième unité de gestion (6, 7) qui appartient au deuxième appareil (2, 3)
(b') attribue une valeur de priorité à chaque deuxième fonction (4, 5),
(c') sélectionne parmi les deuxièmes fonctions (4, 5) celles qui présentent la plus haute valeur de priorité et si une première fonction (4, 5) est exécutée, les deuxièmes fonctions (4, 5) qui forment une paire interdite avec la première fonction (4, 5) en cours restent non prises en compte dans la sélection, (d') identifie une deuxième fonction (4, 5) sélectionnée et restante et
(e') lance la fonction (4, 5) identifiée à l'étape (d').

4. Procédé selon la revendication 3, **caractérisé en ce que** si au cours des étapes (d) et (d'), une première et une deuxième fonction (4, 5) sont identifiées simultanément, le procédé vérifie si ces deux fonctions (4, 5) forment une paire interdite et si oui, seule une des fonctions (4, 5) identifiée est lancée.

5. Procédé selon l'une des revendications 3 ou 4, **caractérisé en ce que** chacune des unités de gestion (6, 7) signale à l'autre unité de gestion (6, 7) au moins les fonctions (4, 5) lancées au cours des étapes (e) et (e') ainsi que la fin de leur exécution qui forme avec au moins une fonction (4, 5) de l'autre unité de gestion (6, 7) une paire interdite.

6. Procédé selon l'une des revendications 3 à 5, **caractérisé en ce que** chacune des unités de gestion (6, 7) signale à l'autre unité de gestion (6, 7) qu'elle envisage de démarrer les fonctions (4, 5) qui forment une paire interdite avec au moins une fonction (4, 5) de l'autre unité de gestion (6, 7).

7. Procédé selon l'une des revendications précédentes, **caractérisé en ce qu'**à l'étape (c), pour chaque première fonction (4, 5) ou, à l'étape (c'), pour chaque deuxième fonction (4, 5), le procédé évalue à l'aide de valeurs de certains paramètres de fonctionnement du dispositif (1) si la première ou la deuxième fonction (4, 5) peuvent ou non être exécutées et sélectionne les premières et les deuxièmes fonctions (4, 5) qui présentent la plus haute valeur de priorité et qui ont été évaluées comme pouvant être exécutées.

8. Procédé selon l'une des revendications précédentes, **caractérisé en ce qu'**au moins l'une des unités de gestion (6, 7) signale à l'autre unité de gestion (6, 7) uniquement les propriétés de modes de fonctionnement ou de composants du dispositif (1) constatées par les fonctions de diagnostic (4, 5) et qui doivent intervenir dans l'attribution d'une valeur de priorité à une fonction (4, 5) à l'étape (b) ou à l'étape (b').

9. Procédé selon l'une des revendications précédentes, **caractérisé en ce que** lorsque l'exécution d'une fonction de diagnostic (4, 5) fait constater une erreur qui peut avoir plusieurs causes, au moins une autre fonction de diagnostic (4, 5) est exécutée pour vérifier la présence d'au moins l'une des causes.

10. Procédé selon la revendication 9, **caractérisé en ce que** pour démarrer précocement l'autre fonction de diagnostic (4, 5) en vue de vérifier la présence de la cause, la valeur de priorité de cette autre fonction de diagnostic (4, 5) est rehaussée.

11. Procédé selon l'une des revendications précédentes, **caractérisé en ce que** la valeur de priorité d'une fonction (4, 5) est abaissée après son exécution.

12. Système en vue de la mise en oeuvre d'un procédé selon l'une des revendications précédentes et présentant au moins deux fonctions (4, 5) qui interagissent avec un dispositif (1) et qui peuvent être exécutées sur au moins deux appareils (2, 3) coopérant l'un avec l'autre et commandant le dispositif (1),
au moins l'une des fonctions (4, 5) étant une fonction de diagnostic qui permet de vérifier le ou les modes de fonctionnement ou au moins un composant du dispositif (1),
des premières fonctions (4, 5) étant installées sur un premier des appareils (2, 3) et des deuxièmes fonctions (4, 5) étant installées sur un deuxième des appareils (2, 3) et
au moins une unité de gestion (6, 7) commandant le déroulement des fonctions (4, 5) de manière à empêcher le déroulement simultané d'une première fonction (4, 5) et d'une deuxième fonction (4, 5) qui se perturbent mutuellement.

13. Système selon la revendication 12, **caractérisé en ce que** le premier appareil (2, 3) et le deuxième appareil sont constitués chacun de microcontrôleurs (16, 17), l'unité de gestion (6, 7) étant installée sur l'un des deux microcontrôleurs (16, 17) en sollicitant une partie de ses ressources de traitement.

14. Système selon la revendication 13, **caractérisé en ce qu'**elle présente des microcontrôleurs (16, 17) identiques.

15. Système selon l'une des revendications 13 ou 14, **caractérisé par** un tampon intermédiaire (15) qui conserve temporairement les messages selon les revendications 5 ou 6.

16. Système selon l'une des revendications 12 à 15, **caractérisé par** un dispositif (1) commandé par les appareils (2, 3).

17. Système selon la revendication 16, **caractérisé en ce que** le dispositif est un moteur (1) et en particulier un moteur à combustion interne.

18. Système selon l'une des revendications 12 à 17, **caractérisé par** un bus CAN (14).
